# EUROPÄISCHE PATENTANMELDUNG

(11) **EP 1 500 801 A1**
(43) Veröffentlichungstag der Anmeldung: **26.01.2005**
(21) Anmeldenummer: 04005217.7
(22) Anmeldetag: 05.03.2004
(51) Int. Cl.: F01P 5/02, B60K 11/04, F28F 9/00, F28D 1/02

(54) **Kühlermodul für flüssigkeitsgekühlte Brennkraftmaschinen**

(30) Priorität: 25.07.2003 DE 10333882
(71) Anmelder: Volkswagen Aktiengesellschaft, 38436 Wolfsburg (DE)
(72) Erfinder: Pauli, Andreas, 38446 Wolfsburg (DE)

(57) **Zusammenfassung**

Die Erfindung betrifft ein Kühlermodul für flüssigkeitsgekühlte Brennkraftmaschinen, bestehend aus zumindest einem Kühlmittelkühler, der ein aus Rohren und Rippen zusammengefügtes Kühlernetz und einen elektromotorisch betriebenen Lüfter aufweist, wobei diese Baugruppen modulartig vormontiert und zwischen der Brennkraftmaschine und der Fahrzeugfront im Vorderwagen eines Kraftfahrzeuges angeordnet werden. Es wird die Aufgabe gelöst, ein solches Kühlermodul zu schaffen, das eine kompakte Bauweise aufweist, für die in Richtung der Fahrzeuglängsachse lediglich wenig Bauraum beansprucht wird. Dies wird erreicht, indem im Kühlernetz (5) ein freier Bauraum (7) ausgestaltet ist, in dem ein Elektromotor (8) für den Antrieb der Lüfterbaugruppe (9) anordenbar ist.

## Beschreibung

Die Erfindung betrifft ein Kühlermodul für flüssigkeitsgekühlte Brennkraftmaschinen, bestehend aus zumindest einem Kühlmittelkühler, der ein aus Rohren und Rippen zusammengefügtes Kühlernetz und einen elektromotorisch betriebenen Lüfter aufweist, wobei diese Baugruppen modulartig vormontiert und zwischen der Brennkraftmaschine und der Fahrzeugfront im Vorderwagen eines Kraftfahrzeuges angeordnet werden.

Der Kühlmittelkreislauf flüssigkeitsgekühlter Brennkraftmaschinen weist überwiegend einen Kühlmittelkühler auf, der im wesentlichen aus zwei Kühlmittelkästen, einem Kühlernetz mit zahlreichen Rohren und Rippen sowie einer Lüfterbaugruppe besteht. In Abhängigkeit vom jeweiligen Fahrzeugtyp können neben dem Kühlmittelkühler weitere Kühler notwendig werden, beispielsweise ein Ölkühler und/oder ein Ladeluftkühler. Diese Baugruppen werden häufig modulartig vormontiert und als kompakte Baugruppe (teilweise als "Front-End-Modul" bezeichnet) im Vorderwagen des Kraftfahrzeuges angeordnet.

So beschreibt DE 101 32 602 A 1 einen Kunststoffträger mit einer Verstärkungseinlage aus Metall, an dem beispielsweise ein Lüfter für das Kühlmittel, ein Lüfter für das Klimagerät, ein Ölkühler und ein Kühlmittelausgleichsbehälter befestigt werden können. Der entsprechend vormontierte Träger wird im freien Bauraum zwischen dem Kühlergrill und dem Kühlmittelkühler eines Kraftfahrzeuges angeordnet. Durch die Vormontage ergeben sich Kosten- und Zeitvorteile für die eigentliche Endmontage. Nachteilig ist jedoch, dass dieses Kühlermodul zusätzlichen Bauraum in Fahrzeuglängsrichtung beansprucht. Somit ist der Einbau bei Kraftfahrzeugen mit kurzem Vorderwagen (z.B. bei Kleintransportern oder Nutzkraftwagen in Frontlenkerbauart) problematisch, weil hierbei eine lediglich geringe Baulänge zwischen der Brennkraftmaschine und der Fahrzeugfront verfügbar ist.

In DE 198 28 362 A 1 wird eine Lüfterhaube beschrieben, die mit einem angeformten Tragstern versehen ist, der den Lüfter für den Kühlmittelkühler trägt. Die Lüfterhaube ist als einstückiges Schalenbauteil mit mindestens einer Hohlkammer für eine Flüssigkeit ausgestaltet. Durch Nutzung der Hohlkammer, z.B. als Ausgleichsbehälter für das Kühlmittel, kann ein sonst notwendiger separater Behälter entfallen. Allerdings bewirkt die bauliche Integration zusätzlicher Baugruppen in die Lüfterhaube ebenfalls eine größere Baulänge in Fahrzeuglängsrichtung.

Aus EP 1 065 465 A 1 ist ein Kühlmittelkühler bekannt, der am Kühlernetz drei stabförmige Träger aufweist, an die ein Elektromotor für den Lüfterantrieb angeschraubt wird. Aus Montage- und Schwingungsgründen verbleibt ein geringfügiger Abstand zwischen dem Elektromotor und dem Kühlernetz. Durch diese Anordnung kann die Baulänge eines Kühlermoduls zwar vermindert werden, jedoch ist die Stabilität einer derartigen Abstützung fragwürdig.

In DE 696 07 663 T 2 wird vorgeschlagen, im Kühlernetz zwischen zwei benachbarten Kühlmittelrohren Aussparungen vorzusehen, durch die Schrauben geführt werden können. Die Schrauben stehen auf der Lüfterseite des Kühlernetzes mit einer flanschartigen Kontur am Elektromotor für den Lüfterantrieb in Wirkverbindung. Auf der lüfterabgewandten Seite werden die Schrauben in einer Platte abgestützt, um Verwerfungen des Kühlernetzes zu vermeiden. Somit wird eine direkte und stabile Abstützung der Lüfterbaugruppe am Kühlernetz erreicht. Allerdings ist der in Fahrzeuglängsachse benötigte Bauraum noch immer relativ groß, so dass auch diese Konstruktion nicht für Anwendungen geeignet ist, bei denen zwischen der Brennkraftmaschine und der Fahrzeugfront nur wenig freier Bauraum verfügbar ist.

Aufgabe der Erfindung ist es, ein Kühlermodul für eine Montage im Vorderwagen eines Kraftfahrzeuges zu schaffen, das eine kompakte Bauweise aufweist, für die in Richtung der Fahrzeuglängsachse lediglich wenig Bauraum beansprucht wird.

Diese Aufgabe wird gelöst, indem im Kühlernetz ein freier Bauraum ausgestaltet ist, in dem ein Elektromotor für den Antrieb der Lüfterbaugruppe anordenbar ist. Dabei kann der freie Bauraum alternativ als Durchbruch zwischen den beiden Seitenflächen des Kühlernetzes oder als Aussparung auf lediglich einer Seitenfläche des Kühlernetzes ausgestaltet werden. Weitere vorteilhafte Ausgestaltungen sind Gegenstand der Unteransprüche, die im Ausführungsbeispiel näher beschrieben werden.

Das erfindungsgemäße Kühlermodul weist eine kompakte Bauweise auf, die in Richtung der Fahrzeuglängsachse lediglich wenig Bauraum beansprucht. Somit ergeben sich insbesondere Vorteile für eine Anwendung in Kraftfahrzeugen mit kurzem Vorderwagen und/ oder einer geringen Baulänge zwischen Brennkraftmaschine und Fahrzeugfront, z.B. bei Kleintransportern oder Nutzkraftwagen in Frontlenkerbauart.

Ein Ausführungsbeispiel der Erfindung ist in der Zeichnung dargestellt und wird nachfolgend beschrieben. Es zeigen:
- Fig. 1: den grundsätzlichen Aufbau eines erfindungsgemäßen Kühlermoduls in perspektivischer Darstellung
- Fig. 2: eine perspektivische Ansicht, hier jedoch von der Gegenseite aus betrachtet mit teilweise aufgebrochener Darstellung sowie in Ausstattung mit zwei Lüftern
- Fig. 3: das Kühlermodul gemäß Fig. 2 in der Draufsicht, jedoch ohne aufgebrochene Darstellung der gezeigten Bauteile

In der Zeichnung ist ein Kühlermodul für flüssigkeitsgekühlte Brennkraftmaschinen dargestellt, das beispielsweise einen Kühlmittelkühler 1, einen Ölkühler 2 und einen Ladeluftkühler 3 aufweist. Diese Baugruppen werden modulartig vormontiert und an einem Träger 4 der Karosserie abgestützt. Das derart zusammengefügte Modul wird zwischen der Brennkraftmaschine und der Fahrzeugfront im Vorderwagen eines (nicht näher dargestellten) Kraftfahrzeuges angeordnet. Dem Kühlermodul können weitere Baugruppen zugeordnet werden, die im vorliegenden Sachverhalt allerdings unerheblich sind. Wesentlich ist hingegen die erfindungsgemäße Ausgestaltung des Kühlmittelkühlers 1.

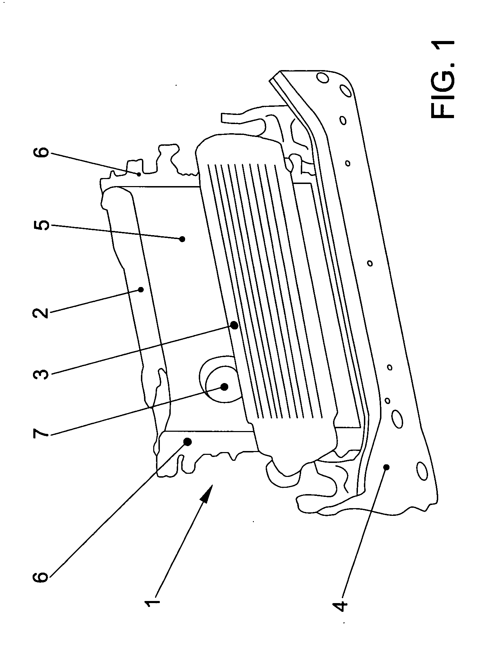

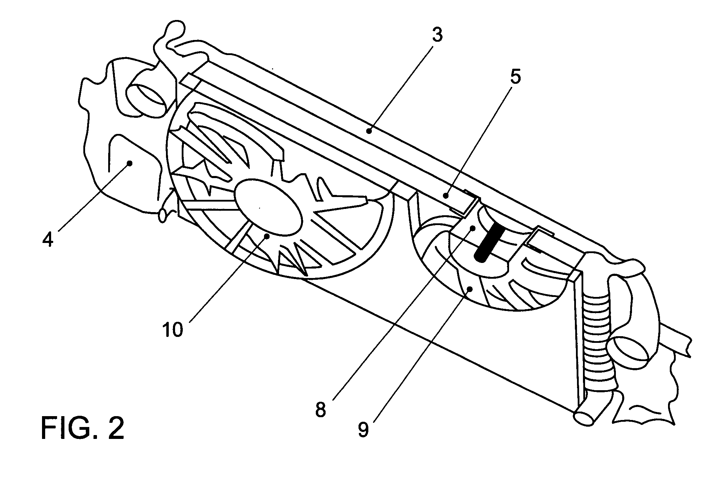

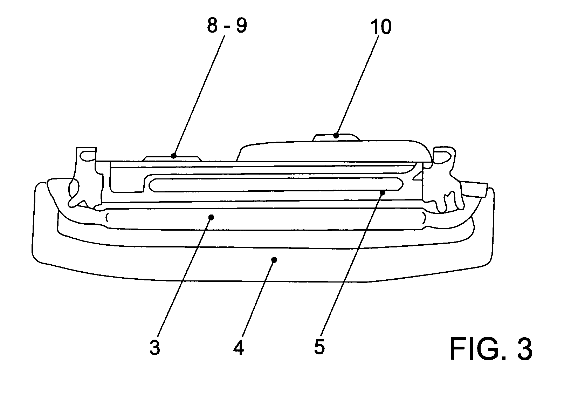

Dieser Kühlmittelkühler 1 besteht in an sich bekannter Weise aus einer Vielzahl von Rohren und Rippen, die ein Kühlernetz 5 bilden und in Kühlmittelkästen 6 abgestützt sind. Dem Kühlernetz 5 ist eine Lüfterbaugruppe zugeordnet. Hierfür ist im Kühlernetz 5 ein freier Bauraum 7 ausgestaltet, in dem ein Elektromotor 8 für den Antrieb eines Lüfters 9 angeordnet werden kann. Der freie Bauraum 7 ist entsprechend Fig. 1 vorzugsweise als Durchbruch zwischen den beiden Seitenflächen des Kühlernetzes 5 ausgestaltet. Mit einer derartigen Anordnung kann die gesamte Tiefe des Kühlernetzes 5 für die Anordnung des Elektromotors 8 genutzt werden, siehe Fig. 2. Folglich wird die Baulänge des Kühlermoduls in Richtung der Fahrzeuglängsachse vorteilhaft vermindert, wobei die geometrische Ausdehnung des Kühlermoduls aus Fig. 3 ersichtlich ist. Alternativ zum Durchbruch kann der freie Bauraum 7 auch als Aussparung auf lediglich einer Seitenfläche des Küh-lernetzes 5 ausgestaltet werden. Allerdings ist dann die erreichbare Reduzierung der Baulänge des Kühlermoduls in Richtung der Fahrzeuglängsachse geringer als bei einem Durchbruch zur Aufnahme des Elektromotors 8.

Unabhängig von der konkreten Anordnung und Ausgestaltung des freien Bauraums 7 im Kühlernetz 5 ergeben sich stets Vorteile, sofern die Innenkontur des freien Bauraums 7 kongruent ist zur Außenkontur des zugeordneten Elektromotors 8 für den Antrieb des Lüfters 9. Somit wird auch bei hohen Lüfterdrehzahlen eine wirksame formschlüssige Abstützung gewährleistet, wobei die Verbindung zwischen Elektromotor 8 und Kühlernetz 5 an sich verschiedenartig ausgestaltet werden kann.

In einer weiteren Ausgestaltung ist es möglich, die erfindungsgemäße Anordnung von Elektromotor 8 und Lüfter 9 mit konventionell angeordneten Lüfterbaugruppen zu kombinieren. Eine diesbezügliche Variante ist in Fig. 2 dargestellt. Hier weist der Kühlmittelkühler 1 eine weitere Lüfterbaugruppe 10 auf, deren Elektromotor jedoch außerhalb der von den Seitenflächen des Kühlernetzes 5 begrenzten Kontur angeordnet ist. Allerdings ist eine derartige Kombination unter Kostenaspekten eher selten zu erwarten. Aus Fig. 3 wird aber zumindest offenkundig, um welchen Betrag die Baulänge des Kühlermoduls in Fahrzeuglängsrichtung reduziert werden kann, sofern anstelle konventioneller Lüfterbaugruppen 10 die erfindungsgemäße Anordnung benutzt wird.

## Patentansprüche

1. Kühlermodul für flüssigkeitsgekühlte Brennkraftmaschinen, bestehend aus zumindest einem Kühlmittelkühler, der ein aus Rohren und Rippen zusammengefügtes Kühlernetz und einen elektromotorisch betriebenen Lüfter aufweist, wobei diese Baugruppen modul-artig vormontiert und zwischen der Brennkraftmaschine und der Fahrzeugfront im Vorder-wagen eines Kraftfahrzeuges angeordnet werden,
**dadurch gekennzeichnet,**
**dass** im Kühlernetz (5) ein freier Bauraum (7) ausgestaltet ist, in dem ein Elektromotor (8) für den Antrieb der Lüfterbaugruppe (9) anordenbar ist.

2. Kühlermodul nach Anspruch 1,
**dadurch gekennzeichnet,**
**dass** der freie Bauraum (7) als Durchbruch zwischen den beiden Seitenflächen des Kühlernetzes (5) ausgestaltet ist.

3. Kühlermodul nach Anspruch 1,
**dadurch gekennzeichnet,**
**dass** der freie Bauraum (7) als Aussparung auf lediglich einer Seitenfläche des Kühlernetzes (5) ausgestaltet ist.

4. Kühlermodul nach Anspruch 1,
**dadurch gekennzeichnet,**
**dass** die Innenkontur des freien Bauraums (7) kongruent ist zur Außenkontur des zugeordneten Elektromotors (8) für den Antrieb der Lüfterbaugruppe (9).

5. Kühlermodul nach Anspruch 1,
**dadurch gekennzeichnet,**
**dass** der Kühlmittelkühler (1) eine weitere Lüfterbaugruppe (10) aufweist, deren Elektromotor jedoch außerhalb der von den Seitenflächen des Kühlernetzes (5) begrenzten Kontur angeordnet ist.
